# EUROPÄISCHE PATENTSCHRIFT

(11) **EP 1 413 488 B1**
(45) Veröffentlichungstag und Bekanntmachung des Hinweises auf die Patenterteilung: **26.07.2006**
(21) Anmeldenummer: 03021288.0
(22) Anmeldetag: 19.09.2003
(51) Int. Cl.: B60R 22/46, B60R 22/195

(54) **Gurtstraffer**
Safety belt pretensioner
Prétensionneur de ceinture de sécurité

(30) Priorität: 24.10.2002 DE 10249476
(43) Veröffentlichungstag der Anmeldung: 28.04.2004
(73) Patentinhaber: AUDI AG, 85045 Ingolstadt (DE)
(72) Erfinder: Kahne, Thomas, 85296 Rohrbach (DE)
(74) Vertreter: Engelhardt, Harald

(56) Entgegenhaltungen:
- GB-A- 2 319 502
- US-A- 5 564 748

## Beschreibung

Die Erfindung betrifft einen Gurtstraffer.

Aus der Sicherheitstechnik für Kraftfahrzeuge ist es bekannt, bei Unfällen Gurte zu straffen. Dabei werden zwei unterschiedliche Systeme eingesetzt. Zum einen wird vorgesehen, die wirksame Länge des Gurtes im Bereich des Gurtaufrollers zu verkürzen, zum anderen wird vorgesehen, die wirksame Länge des Gurtes im Bereich des Gurtschlosses zu verkürzen. Dabei werden unterschiedliche Antriebe verwendet.

Ein Gurtstraffer gemäß dem Oberbegriff von Anspruch 1 ist aus US 5,564,748 bekannt.

DE 195 08 626 A1 beschreibt beispielsweise eine pyrotechnisch angetriebene Antriebseinheit für einen Gurtaufroller, bei der ein pyrotechnisch angetriebener Kolben über eine Zahnstange ein Zahnrad antreibt, welches bei einem Unfall den Gurt teilweise aufrollt. Bei dieser Antriebseinheit ist ein pyrotechnischer Abstandshalter vorgesehen, der bei der Zündung der pyrotechnischen Ladung mit dieser gemeinsam abbrennt, so daß die Zahnstange und das Zahnrad nach einem Unfall außer Eingriff sind. Diese Antriebseinheit ist jedoch in ihrer Herstellung sehr aufwendig und läßt sich gurtschlosseitig nicht einsetzen.

Um der Verkürzung der wirksamen Länge eines Gurtes bei einem Unfall Rechnung zu tragen, ist aus DE 39 36 306 A1 bekannt, auf der Seite des Gurtschlosses einen Sicherheitsgurtverschluß so zu gestalten, daß auch nach Abschluß des Strammvorganges die Bedienungstaste in einer zugänglichen Stellung für die angeschnallte Person erreichbar ist. Dazu ist vorgesehen, daß die Auslösetaste zweiteilig mit zwei miteinander gekoppelten, gegeneinander beweglichen Tastenteilen ausgebildet ist, von denen ein Tastenteil der Bewegung des Verschlußkörpers beim Strammvorgang folgt und das andere Tastenteil beim Abschluß des Strammvorganges in der durch die Ruhelage des Verschlusses vorgegeben Bedienungsstellung steht. Diese Ausgestaltung führt jedoch zu einem technisch sehr aufwendigen und großen Verschluß.

Trotz der eingangs genannten Maßnahme ist es bei Gurtschloßstraffern mit Standardverschluß nachteilig, daß sich das Gutschloß nach einem Unfall nur schlecht oder gar nicht öffnen läßt, wodurch Personen gehindert werden, das Fahrzeug nach einem Unfall zu verlassen.

Der Erfindung liegt daher die Aufgabe zugrunde, einen Gurtstraffer zur Verfügung zu stellen, welcher es nach einem Unfall ermöglicht, das Fahrzeug schnell zu verlassen. Insbesondere soll einen Gurtstraffer zur Verfügung gestellt werden, welcher auch bei einem Einsatz in einem Fahrzeug mit einem sich an einen Fahrzeugsitz dicht anschließenden Bauteil nach einem Unfall ein problemloses Verlassen des Fahrzeuges ermöglicht.

Die Lösung dieser Aufgabe erfolgt erfindungsgemäß mit den Merkmalen des Anspruchs 1.

Gemäß der Erfindung ist bei einem Gurtstraffer mit einer Kolben-Zylinder-Einheit und einer pyrotechnischen Ladung, welche den Abstand von Halterungen, mit denen die Kolben-Zylinder-Einheit einerseits gegenüber einer Fahrzeugkarosserie festgelegt ist und andererseits ein Gurtschloß trägt, bei einem Unfall verkürzt, vorgesehen, daß die Kolben-Zylinder-Einheit eine Sollschwachstelle aufweist, welche nach einer Verkürzung infolge eines Unfalles und nach dem Verstreichen eines Sicherheitszeitraumes eine Verlängerung des Abstandes der Halterungen aus ihrer verkürzten Position ermöglicht.

Vorzugsweise wird die Sollschwachstelle erst durch die Wirkung der gezündeten pyrotechnische Ladung aktiviert. Wenn die Aktivierung der Sollschwachstelle durch die gezündete pyrotechnische Ladung erfolgt, sind weitere Mittel nicht erforderlich, was zu einer sicheren Arbeitsweise und kostengünstigen Herstellung führt. Dabei ist eine Aktivierung sowohl durch die thermische als auch die chemische Wirkung der gezündeten Ladung möglich.

Gemäß einer bevorzugten Ausführungsform ist vorgesehen, daß die Sollschwachstelle durch einen Kolben und/oder einen Kolbenboden der Kolben-Zylinder-Einheit gebildet wird, wobei sich der Kolben und/oder der Kolbenboden durch die Wirkung der gezündeten pyrotechnische Ladung zersetzt. Wird der Kolben und/oder Kolbenboden zersetzt, ist es gemäß einer bevorzugten Variante möglich, das Gurtschloß von der Karosserie gänzlich abzukoppeln, so daß sich nach einem Unfall das Öffnen des Gurtschlosses, welches dann nur noch an dem Gurt hängt, erübrigt. Bei einer solchen Ausgestaltung ist selbst dann ein Verlassen des Fahrzeuges einfach möglich, wenn das Gurtschloß durch den Unfall beschädigt worden sein sollte.

Alternativ zu der vorgenannten bevorzugten Ausführungsform ist gemäß einer weiteren bevorzugten Ausführungsform vorgesehen, daß die Sollschwachstelle durch einen Kolben und/oder einen Kolbenboden der Kolben-Zylinder-Einheit gebildet wird, wobei der Kolben und/oder der Kolbenboden durch die Wirkung der gezündeten pyrotechnische Ladung derart geschwächt wird, daß schon geringe mechanische Spannungen eine Verlängerung des Abstandes der Halterungen aus ihrer verkürzten Position bewirken.

Eine besonders einfach und damit kostengünstige Herstellung ergibt sich, wenn der Kolben und/oder der Kolbenboden aus einem Material gefertigt sind, welches aufgrund der thermischen Einwirkung der gezündeten pyrotechnische Ladung eine Zersetzung bzw. Schwächung erfährt.

Weitere bevorzugte Ausführungsformen und Weiterbildungen der Erfindung ergeben sich aus den Unteransprüchen sowie aus der Beschreibung im Zusammenhang mit den Zeichnungen. Es zeigen:
- Fig. 1: einen Gurtstraffer gemäß einer ersten bevorzugten Ausführungsform der Erfindung, und
- Fig. 2: einen Gurtstraffer gemäß einer zweiten bevorzugten Ausführungsform der Erfindung.

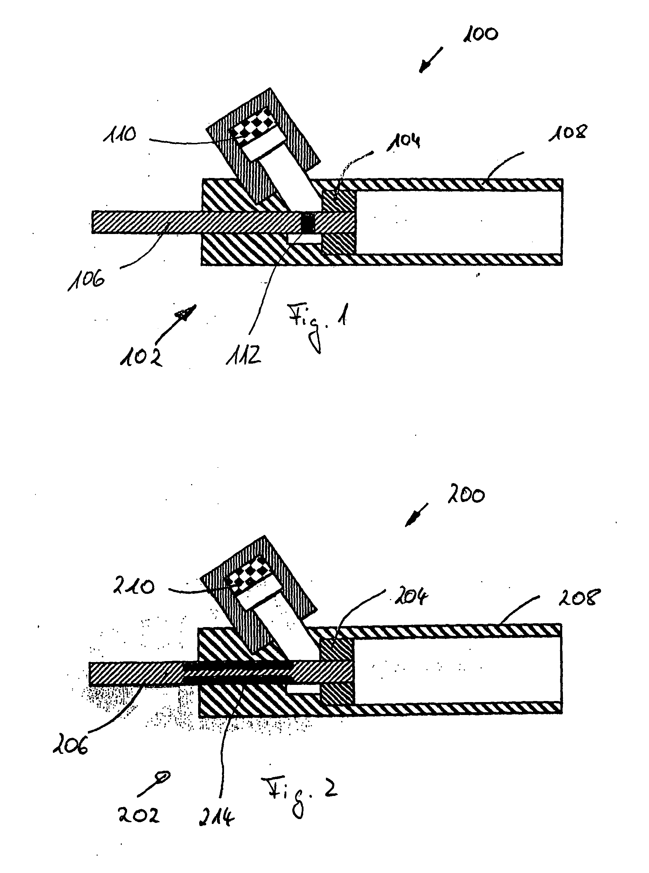

Der in Figur 1 gezeigte Gurtstraffer 100 weist eine Kolben-Zylinder-Einheit 102 mit einem Kolben 104 und einer Kolbenstange 106 auf, wobei der Kolben 104 im Innern eines Zylinders 108 angeordnet ist. Der Gurtstraffer 100, dessen Zylinder 108 gegenüber einer Kraftfahrzeugkarosserie mittels Befestigungsmitteln (nicht gezeigt) befestigt ist, dient dazu, ein Gurtschloß (nicht gezeigt), welches über Befestigungsmittel an der Kolbenstange 106 befestigt ist, bei einem Unfall derart zu verlagern, daß die wirksame Länge eines Fahrzeugsicherheitsgurtes verkürzt wird. Dazu ist eine pyrotechnische Ladung 110 vorgesehen, welche bei einem Unfall vorzugsweise aufgrund von Signalen von Beschleunigungssensoren gezündet wird, so daß ein pyrotechnisches Verbrennungsgas auf den Kolben 104 einwirkt und diesen und damit mittelbar das Gurtschloß verlagert.

Die bei dem Gurtstraffer 100 gemäß der ersten Ausführungsform vorgesehene Kolbenstange 106 weist eine Sollschwachstelle 112 auf, die aus einem Material gefertigt ist, welches sich aufgrund der thermischen Einwirkung der gezündeten pyrotechnischen Ladung zersetzt. Da diese Zersetzung nicht mit der gleichen Geschwindigkeit wie die Gasbildung bei Zündung der pyrotechnischen Ladung 110 erfolgt, verstreicht nach einem Unfall zunächst ein Sicherheitszeitraum, nach dessen Ende durch die vollständige Zersetzung des Abschnittes der Kolbenstange 106 das Gurtschloß gegenüber der Karosserie frei wird, wodurch ein Verlassen des Fahrzeuges möglich ist, ohne das Gurtschloß öffnen zu müssen.

Der Gurtstraffer 200 gemäß der zweiten Ausführungsform entspricht in seinem Aufbau im wesentlichen dem Gurtstraffer 100 gemäß der ersten Ausführungsform. Wie der Gurtstraffer 100 gemäß der ersten Ausführungsform weist der Gurtstraffer 200 eine Kolben-Zylinder-Einheit 202, aufweisend einen Kolben 204, eine Kolbenstange 206 und einen Zylinder 208 auf. Wie bei der ersten Ausführungsform ist vorgesehen, den Zylinder 208 gegenüber der Fahrzeugkarosserie festzulegen und ein Gurtschloß mit der Kolbenstange 206 zu verbinden. Zur Verkürzung der wirksamen Länge des Gurtes ist wiederum eine pyrotechnische Ladung 210 vorgesehen, welche auf den Kolben 204 einwirkt.

Die beiden Ausführungsformen des Gurtstraffers 100, 200 unterscheiden sich jedoch hinsichtlich der Ausgestaltung der Kolbenstange 106 bzw. 206. Während sich die Kolbenstange 106 gemäß der ersten Ausführungsform im Bereich einer Sollschwachstelle 112 durch die Wirkung einer gezündeten pyrotechnischen Ladung vollständig zersetzt, weist die Kolbenstange 206 eine Sollschwachstelle 214 auf, in deren Bereich die Kolbenstange 206 durch die Wirkung der gezündeten pyrotechnischen Ladung derart geschwächt wird, daß schon geringe mechanische Spannungen eine Verlängerung des Abstandes von Halterungen für das Gurtschloß bzw. der Karosserie bewirkten. Die Sollschwachstelle 214 ist dabei aus einem Kunststoffmaterial gefertigt, welches aufgrund der thermischen Wirkung der pyrotechnischen Ladung weich wird, und dadurch mechanischen Spannungen nicht mehr zu widerstehen in der Lage ist. Die Kolbenstange wird also ganz oder teilweise plastifiziert, wodurch das Gurtschloß wieder in eine Position gezogen werden kann, in der es leicht zugänglich ist. Auf diese Weise kann verhindert werden, daß ein Gurtschloß, welches durch die Straffung zwischen einem Sitz und einer Tunnelkonsole oder zwischen zwei Sitzen zunächst verschwunden ist, ein Verlassen des Fahrzeuges verhindert. Bei Verwendung eines erfindungsgemäßen Gurtstraffers stellen somit auch lange Verlagerungswege, auch solche zwischen 30 und 100 mm, insbesondere 50 mm kein Sicherheitsrisiko dar.

## Patentansprüche

1. Gurtstraffer mit einer Kolben-Zylinder-Einheit (102; 202) und einer pyrotechnischen Ladung (110; 210), welche den Abstand von Halterungen, mit denen die Kolben-Zylinder-Einheit (110; 210) einerseits gegenüber einer Fahrzeugkarosserie festgelegt ist und andererseits ein Gurtschloß trägt, bei einem Unfall verkürzt, **dadurch gekennzeichnet, daß** die Kolben-Zylinder-Einheit (102; 202) eine Sollschwachstelle (112; 214) aufweist, welche nach einer Verkürzung infolge eines Unfalles und nach dem Verstreichen eines Sicherheitszeitraumes eine Verlängerung des Abstandes der Halterungen aus ihrer verkürzten Position ermöglicht.

2. Gurtstraffer nach Anspruch 1, **dadurch gekennzeichnet, daß** die Sollschwachstelle (112; 214) erst durch die Wirkung der gezündeten pyrotechnischen Ladung aktiviert wird.

3. Gurtstraffer nach Anspruch 2, **dadurch gekennzeichnet, daß** die Sollschwachstelle (112) durch einen Kolben und/oder einen Kolbenboden der Kolben-Zylinder-Einheit gebildet wird oder in diesem ausgebildet ist, wobei sich der Kolben (106) und/oder der Kolbenboden durch die Wirkung der gezündeten pyrotechnischen Ladung mindestens teilweise zersetzt.

4. Gurtstraffer nach Anspruch 3, **dadurch gekennzeichnet, daß** durch die Zersetzung des Kolbens (106) und/oder des Kolbenbodens die Verbindung des Gurtschlosses mit der Karosserie gelöst wird.

5. Gurtstraffer nach Anspruch 1 oder 2, **dadurch gekennzeichnet, daß** die Sollschwachstelle (214) durch einen Kolben (206) und/oder einen Kolbenboden der Kolben-Zylinder-Einheit gebildet wird, wobei der Kolben (206) und/oder der Kolbenboden durch die Wirkung der gezündeten pyrotechnische Ladung derart geschwächt wird, daß schon geringe mechanische Spannungen eine Verlängerung des Abstandes der Halterungen aus ihrer verkürzten Position bewirken.

6. Gurtstraffer nach einem der Ansprüche 3 bis 5, **dadurch gekennzeichnet, daß** der Kolben (106; 206) und/oder der Kolbenboden aus einem Material gefertigt sind, welches aufgrund der thermischen Einwirkung der gezündeten pyrotechnischen Ladung eine Zersetzung bzw. Schwächung erfährt.

## Claims

1. Seat-belt tightener featuring a piston-and-cylinder unit (102; 202) and a pyrotechnic charge (110; 210), which in the event of an accident shortens the distance between mountings which fix the piston-and-cylinder unit (102; 202) with respect to a vehicle body, on the one hand, and carries a belt buckle, on the other hand, **characterised in that** the piston-and-cylinder unit (102; 202) has a nominal rupture point (112; 214) which, after a shortening procedure as a result of an accident and following the elapse of a safety interval, makes it possible for the distance between the mountings to be lengthened from their shortened position.

2. Seat-belt tightener according to claim 1, **characterised in that** the nominal rupture point (112; 214) is only activated by the effect of the ignited pyrotechnic charge.

3. Seat-belt tightener according to claim 2, **characterised in that** the nominal rupture point (112) is constituted by a piston and/or piston bottom belonging to the piston-and-cylinder unit or is developed therein, the piston (106) and/or the piston bottom being at least partly destroyed by the action of the ignited pyrotechnic charge.

4. Seat-belt tightener according to claim 3, **characterised in that** the destruction of the piston (106) and/or piston bottom severs the connection between the belt buckle and the vehicle body.

5. Seat-belt tightener according to claim 1 or 2, **characterised in that** the nominal rupture point (214) is constituted by a piston (206) and/or piston bottom belonging to the piston-and-cylinder unit, the piston (206) and/or piston bottom being attenuated by the action of the ignited pyrotechnic charge in such a way that even small mechanical stresses bring about a lengthening of the distance between the mountings from their shortened position.

6. Seat-belt tightener according to any one of claims 3 to 5, **characterised in that** the piston (106; 206) and/or piston bottom are manufactured from a material that undergoes destruction or attenuation due to the thermal effect of the ignited pyrotechnic charge.

## Revendications

1. Prétensionneur de ceinture de sécurité avec une unité cylindre-piston (102 ; 202) et une charge pyrotechnique (110 ; 210), qui, lors d'un accident, raccourcit l'écart des fixations, avec lesquelles l'unité cylindre-piston d'une part est fixée contre une carrosserie de véhicule et d'autre part porte une attache de ceinture, **caractérisé en ce que** l'unité cylindre-piston (102; 202) comporte un point faible théorique (112; 214), qui permet après un raccourcissement suite à un accident et après l'écoulement d'un délai de sécurité, un allongement de l'écart des fixations à partir de leur position raccourcie.

2. Prétensionneur de ceinture de sécurité selon la revendication 1, **caractérisé en ce que** le point faible théorique (112; 214) est d'abord activé par l'effet de la charge pyrotechnique allumée.

3. Prétensionneur de ceinture de sécurité selon la revendication 2, **caractérisé en ce que** le point faible théorique (112) est formé par un piston et/ou une tête de piston de l'unité cylindre-piston ou est formé dans celui-ci, sachant que le piston (106) et/ou la tête de piston se désagrège au moins partiellement sous l'effet de la charge pyrotechnique allumée.

4. Prétensionneur de ceinture de sécurité selon la revendication 3, **caractérisé en ce que** par la désagrégation du piston (106) et/ou de la tête de piston, la liaison de l'attache de la ceinture avec la carrosserie est perdu.

5. Prétensionneur de ceinture de sécurité selon la revendication 1 ou 2, **caractérisé en ce que** le point faible théorique (214) est formé par un piston (206) et/ou une tête de piston de l'unité cylindre-piston, sachant que le piston (206) et/ou la tête de piston est affaiblie par l'effet de la charge pyrotechnique allumée de telle manière que de minuscules tensions mécaniques provoquent déjà un allongement de l'écart des fixations à partir de leur position raccourcie.

6. Prétensionneur de ceinture de sécurité selon l'une des revendications 3 à 5, **caractérisé en ce que** le piston (106 ; 206) et/ou la tête de piston sont fabriqués dans un matériau qui subit une désagrégation ou un affaiblissement à cause de l'action thermique de la charge pyrotechnique allumée.
